# FASCICULE DE BREVET EUROPEEN

(11) **EP 0 712 809 B1**
(45) Date de publication et mention de la délivrance du brevet: **27.08.1997**
(21) Numéro de dépôt: 95402598.7
(22) Date de dépôt: 20.11.1995
(51) Int. Cl.: C02F 3/34, E21B 21/06

(54) **Procédé de prétraitement enzymatique des déblais de forage**
Verfahren zur enzymatischen Vorverarbeitung der Bohrabfälle
Process for enzymatic pretreatment of drill cuttings

(30) Priorité: 21.11.1994 FR 9413921
(43) Date de publication de la demande: 22.05.1996
(73) Titulaire: ELF AQUITAINE PRODUCTION, 92400 Courbevoie (FR)
(72) Inventeur: Aliphat, Sophie, F-64140 Billere (FR); Perie, Frédéric, F-64140 Billere (FR); Zurdo, Christian, F-64000 Pau (FR); Martignon, Alain, F-64400 Oloron Sainte Marie (FR)
(74) Mandataire: Boillot, Marc

(56) Documents cités:
- EP-A- 0 374 700
- DE-A- 2 634 040
- US-A- 5 126 051
- CHEMICAL ABSTRACTS, vol. 120, no. 14, 4 Avril 1994 Columbus, Ohio, US; abstract no. 172477y, HITZMAN, DONALD O. 'ENZYMIC BIOREMEDIATION OF DRILLING MUD WASTES' page 590; colonne L; & BIOHYDROMETALLURGICAL TECHNOLOGIES, PROC. INT. BIOHYDROMETALL. SYMPOSIUM, vol. 2, 22 - 25 Août 1993 JACKSON HOLE, pages 375-384,

## Description

La présente invention vise un procédé de prétraitement enzymatique de déblais récupérés des boues de forage remontées du puits, et plus particulièrement les gros déblais éliminés par tamisage et qui demeurent imprégnés de boue. Elle concerne plus particulièrement les déblais imprégnés de boues dites de substitution.

Au cours d'un forage, la boue joue un rôle essentiel; elle assure la remontée des déblais provenant du terrain creusé au fond du puits, leur lubrification par enrobage, et le refroidissement de l'outil de forage. Cependant en sortie du puits, il est nécessaire de séparer les fragments de roche minérale constituant ces déblais de la boue par tamisages successifs et décantation. La boue ainsi tamisée et décantée peut être recyclée dans le puits pour un nouveau cycle de forage.

Parallèlement à ce recyclage de la boue, se pose le problème de la récupération et du stockage des déblais. si celui-ci est déjà délicat sur un champ de production, il est beaucoup plus difficile à résoudre sur une plate-forme pétrolière, car les contraintes en matière de règlementation de l'environnement sont beaucoup plus strictes, d'autant que des déblais ne peuvent qu'être rejetés en pleine mer, pour que ce soit économiquement viable.

En outre, ce rejet en mer des déblais va dépendre essentiellement de la nature de la boue utilisée qui est plus ou moins toxique ou biodégradable.

Différents types de boues sont utilisés pour le forage. Ce sont, tout d'abord, les boues à l'eau dont la fraction organique majoritaire est à base de cellulose, de dérivés de cellulose et de dérivés d'acide acrylique. Ces boues sont facilement biodégradables et n'occasionnent pas de dégradation potentielle de l'environnement. Cependant, ces boues sont difficilement utilisables dans les conditions de forage, ce qui ne favorise pas leur emploi. Les boues à l'huile leur sont préférées économiquement ; elles sont essentiellement constituées d'une émulsion inverse stabilisée d'eau dans l'huile, généralement du gasoil, et leurs propriétés rhéologiques sont ajustées au moyen d'additifs viscosifiants, densifiants et autres. Cependant, elles représentent un très grand risque de pollution car difficilement biodégradables et toxiques. Un troisième type de boues, appelée boues de substitution, est utilisé surtout en remplacement des boues à l'huile, mais elles sont encore jugées trop polluantes par leur charge organique pour être utilisées en mer. Elles sont formulées soit à partir d'esters en émulsion stabilisée soit à partir de polyglycols, de polyéthylèneglycol ou de polyalphaoléfines.

Ces boues ont été développées pour éviter d'utiliser le gasoil et le mazout dans la formulation des boues à l'huile. Si elles présentent une partie des caractéristiques rhéologiques du gasoil sans être toxiques, elles n'en sont pas moins lentement et ou faiblement biodégradables.

Dans l'état actuel des législations en vigueur pour les rejets en mer, les boues à l'huile sont interdites même en cas de non rejet des déblais dans la mer. Par ailleurs, on peut s'attendre à ce que dans l'avenir, les boues de substitution dont le premier critère de sélection n'est pas la biodégradabilité soient également interdites.

Jusqu'à présent, la biodégradabilité de ces boues à base d'esters a été démontrée (voir la publication de J. Steber, C.P. Herold (Henkel KGaA) et J.M. Limia (Baroid) Offshore,60, September 1984). Cependant, les traitements de biodégradation proposés bien qu'efficaces sont très longs ce qui impose un stockage des déblais difficilement réalisable notamment en mer sur les Plates-formes pétrolières où la place est comptée.

La présente invention vise à accélérer la biodégradation des boues, et plus particulièrement des boues de substitution à base d'esters par un traitement enzymatique préalable au traitement bactériologique usuellement pratiqué.

Les traitements enzymatiques des boues en général, sont connues notamment pour augmenter leur perméabilité dans la formation au fond d'un puits comme il est décrit dans le brevet allemand DD-A-240905 du 13.09.85. D'autres traitements comme décrit dans le brevet US-A-5.126.051 mettent en oeuvre des réactions d'hydrolyse enzymatique au moyen de cellulases, en vue de dégrader les composés viscosifiants résiduels,dérivés de la cellulose provenant de la boue et contenus dans des solutions homogènes résultant de la décantation des fines de roche remontées par la boue tamisée, débarrassée des gros déblais. Il s'agit dans ce brevet de rompre l'homogénéité de ce liquide pour obtenir deux phases, l'une constituée de solides divisés recyclables dans la boue, l'autre liquide qui est éliminé. Par hydrolyse de l'agent maintenant l'homogénéité du liquide, on a modifié sa nature physique pour permettre la séparation des deux phases.

Contrairement à ce qui est exposé précédemment, la présente invention a pour but de modifier chimiquement la boue afin d'en accélérer sa dégradation bactériologique.

Dans le cadre de la présente invention, on entend par boue toute phase organique synthétique pure contenant notamment des esters et utilisée comme boue de forage, tous déblais constitués de roches imprégnées de boue et les boues brutes obtenues après tamisage des déblais, contenant encore les fines de roche.

La présente invention a donc pour objet un procédé de traitement des boues de forage organiques de synthèse récupérées à la surface du sol caractérisé en ce qu'il comporte au moins une étape d'hydrolyse d'au moins un ester d'acide carboxylique contenu dans de la dite boue au moyen d'une lipase. Cette étape est de préférence réalisée à pH basique, à une température inférieure à 60°C. Plus particulièrement, le pH est choisi supérieur à 9 et de préférence compris entre 9 et 10.

On entend par lipase une protéine classée parmi les enzymes, dont la fonction naturelle est d'hydrolyser les liaisons esters résultant de l'estérification d'un acide gras sur un alcool et, plus particulièrement, les triglycérides.

Dans le procédé selon l'invention, on préfère les lipases du groupe constitué par les lipases de type triacylglycérol hydrolase d'origines fongiques et animales.

Pour le procédé de traitement des boues selon l'invention, on préfera les triacylglycérol acyl hydrolases de nomenclature 3.1.1.3 appelées aussi triacylglycérol lipases, triglycéride lipases ou encore tributirases.

Le traitement par hydrolyse selon l'invention est particulièrement approprié à un traitement des boues synthétiques de substitution à base d'esters préalablement au traitement bactériologique visant leur destruction avant rejet en mer des déchets. Dans un mode préféré de l'invention, ce procédé comprend au moins une étape de prétraitement de la boue qui consiste à introduire dans celle-ci une quantité nécessaire de lipase en présence de 30 à 50 % en poids d'eau, à maintenir le pH entre 9 et 10 et la température en-dessous de 60°C et à agiter le mélange, puis au moins une étape de traitement bactériologique qui consiste à introduire une quantité nécessaire de bactéries dans le mélange. Dans le procédé selon l'invention, plus la quantité de lipase est importante, plus l'accélération de la biodégradation de ces boues est importante, jusqu'à hydrolyse totale des esters.

Le procédé est avantageux quelles que soient les bactéries utilisées ultérieurement, c'est-à-dire des bactéries marines cultivées en milieu liquide de synthèse ou encore des bactéries adaptées et sélectives de la dégradation de la graisse dont les triglycérides font partie.

Un autre avantage du procédé selon l'invention est qu'il est dit aérobie, c'est-à-dire qu'il peut être mis en oeuvre en présence d'oxygène.

Dans le cadre de la présente invention, les boues à traiter contiennent des esters d'acides de la famille constituée par les monoesters les diesters et les polyesters d'acides carboxyliques résultant de la réaction d'estérification d'alcools de chaîne linéaire ou ramifiée, saturée ou non, comprenant de 1 à 15 atomes de carbone avec un acide mono, di ou polycarboxylique comprenant des chaînes linéaires ou ramifiées, saturées ou non comprenant de 6 à 30 atomes de carbone.

Dans un mode préféré de l'invention, on traitera de préférence les esters d'acides mono, di et tricarboxyliques, les groupements esters comprenant de 1 à 8 atomes de carbone, et les chaînes de chaque acide comprenant de 6 à 18 atomes de carbones.

Le procédé selon l'invention est de préférence appliqué aux boues de substitution contenant des esters remontées du fond du puits de forage, notamment de puits marins, qu'elles soient chargées ou non en déblais de forage ou imprégnées dans ces déblais.

Pour illustrer les avantages de la présente invention, la figure 1 et les exemples ci-après sont donnés à titre non limitatif.

### EXEMPLE 1:

Le présente exemple vise à illustrer l'hydrolyse de mélanges d'esters vendus comme boues de substitution en émulsion aqueuse par des lipases.

Trois mélanges d'esters utilisés comme boues de substitution ont été pris comme référence ;
S1 est le mélange d'esters PETROFREE,
S2 est le mélange d'esters FINAGREEN et
S3 est le mélange d'esters TOTAL 8110.

S1, S2 et S3 sont mis en émulsion dans l'eau pour un rapport eau:mélange d'esters 50:50. Ces émulsions sont stabilisées par ajout de 0.3 % en poids d'alcool polyvinylique. On opère en maintenant le pH de l'émulsion à 9 et la température à 40°C.

L'aptitude à l'hydrolyse de trois lipases fongiques est testée ; ce sont l'esturase correspondant à une lipase fongique, vendue par Gist Brocades, la lipase S correspondant à une lipase fongique vendue par Gist Brocades et la lipolase vendue par Novo Noradisk.

On estime l'hydrolyse par la quantité d'acides gras libres formés au cours de la réaction de la lipase sur les esters ; on utilise un pH stat indiquant la quantité de soude nécessaire pour neutraliser les acides gras libres formés en fonction du temps, à pH constant. Ainsi, le taux d'hydrolyse correspond à la pente à l'origine de la courbe de formation d'acide au cours du temps, ce taux étant ramené au mg de lipase.

Le tableau ci-après rassemble les résultats obtenus qui expriment l'activité hydrolytique de ces lipases par mg de lipase utilisé.

**TABLEAU 1**

| | S1 | S2 | S3 |
|---|---|---|---|
| ESTERASE | 0,875 | 0,500 | 0,500 |
| LIPOLASE | 0,500 | 0,500 | 0,750 |
| LIPASE S | 1,000 | 0,875 | 0,500 |

On constate que ces trois lipases ont une aptitude à hydrolyser équivalente; cependant, la lipase S est plus efficace pour les échantillons S1 et S2 de PETROFREE et de FINAGREEN, tandis que la lipolase est plus efficace au regard de S3, échantillon de TOTAL N 8110.

### EXEMPLE 2:

Le présent exemple décrit l'hydrolyse de boues de forage formulées, la boue PETROFREE ou B1, la boue FINAGREEN ou B2 et la boue TOTAL N 8110 ou B3. Comme dans l'exemple 1, on va tester l'efficacité des trois lipases, l'estérase, la lipolase et la lipase S.

On prélève 150 ml de boue dans une fiole, on ajuste le pH à 9, et la température à 40°C et on ajoute progressivement la lipase dont on veut mesurer l'activité hydrolytique tout en agitant la fiole.

Comme dans l'exemple 1, on mesure la quantité d'acides gras libres formés en fonction du temps. Les résultats relatifs à l'activité des lipases testées sont rassemblés dans le tableau 2 suivant.

**TABLEAU 2**

| | B1 | B2 | B3 |
|---|---|---|---|
| ESTERASE | 1,17 | 0,66 | 0,75 |
| LIPOLASE | 1,953 | 1,19 | 1,008 |
| LIPASE S | 1,36 | 1,85 | 0,89 |

Ces résultats confirment que même dans les boues formulées, les esters sont hydrolysés. On constate que ces résultats sont sensiblement meilleurs que dans l'exemple 1 dans la mesure où les esters sont mieux dispersés dans les boues que dans les émulsions et présentent donc une plus grande surface de réaction disponible pour les lipases.

### EXEMPLE 3 :

Le présent exemple vise à illustrer l'hydrolyse des esters piégés dans les déblais de forage suite à l'imprégnation de ces déblais par les boues de forage, et plus particulièrement de la boue PETROFREE ou, B1.

Dans cet exemple, nous nous sommes limités à tester l'efficacité de la lipolase. Cette efficacité a été estimée en mesurant la concentration finale d'acides gras libres et d'esters dans une suspension de déblais avant et après traitement par la lipolase. La quantification des différents composés est obtenue par chromatographie en phase gazeuse ou par colorimétrie selon une procédure connue en soi.

La suspension de déblais est obtenue en mélangeant à un gramme de déblais un gramme d'eau et en agitant perpétuellement le mélange. La lipolase est ajoutée à la suspension pour obtenir des teneurs variant entre 2,5 mg/g à 10 mg/g dans la suspension. Bien entendu, le pH est maintenu à 9 et la température à 40°C pendant la durée des opérations. Pour effectuer les mesures, les acides gras et les esters sont extraits au dichlorométhane après acidification de la suspension avant ou après traitement par l'enzyme.

Les résultats des essais sont rassemblés dans le tableau 3 ci-après; ils correspondent àl'hydrolyse de 100 g de déblais pendant deux heures.

**TABLEAU 3**

| Concentration en lipolase | 0 mg/g | 2,5 mg/g | 5 mg/g | 10 mg/g |
|---|---|---|---|---|
| Esters présents en g/100g déblais | 2,39 | 1,5 | 1,215 | 1,0 |
| Acide gras g/100g déblais | 0 | 0,3075 | 0,625 | 0,784 |

Ces résultats confirment que les esters contenus dans les déblais sont bien hydrolysés par les lipases, ici la lipolase.

### EXEMPLE 4 :

Le présent exemple tend à illustrer l'effet accélérateur du prétraitement par hydrolyse enzymatique selon l'invention sur la biodégradation des boues de substitution. Dans ce but, nous avons comparé l'efficacité de la biodégradation sur des boues PETROFREE, FINAGREEN et TOTAL N 8110, soit B₁, B₂ et B₃ hydrolysées et non hydrolysées, par des bactéries suceptibles de dégrader les graisses, donc les triglycérides ; ici des aliquots bactériens sont mis en suspension dans un mélange 50/50 de boue et d'eau à pH 7. Pour suivre cette biodégradation par les bactéries, on mesure la DCO résiduelle de la phase liquide après séparation des phases liquides et solides par centrifugation.

Dans le tableau 4 ci-après sont rassemblés les mesures de DCO en fonction du temps sur des boues hydrolysées et non hydrolysées avant et après inoculation de bactéries.

Les boues ont été hydrolysées pendant 2H30 par de la lipolase, puis ont été inoculées par la suspension bactérienne selon un mode connu en soit.

**TABLEAU 4**

| temps/jour | B1 | | B2 | | B3 | |
|---|---|---|---|---|---|---|
| | avec | sans | avec | sans | avec | sans |
| 0 | 1000 | 1000 | 970 | 970 | 970 | 970 |
| 1 | 380 | 900 | 800 | 950 | 730 | 950 |
| 2 | 340 | 820 | 730 | 900 | 670 | 850 |
| 3 | 300 | 750 | 700 | 800 | 630 | 760 |
| avec: avec addition de lipolase sans: sans addition de lipolase | | | | | | |

Ces résultats montrent que les boues hydrolysées avant l'addition de bactéries sont plus rapidement biodégradées. cet effet est particulièrement sensible sur la boue Petrofree B₁. Il ya donc bien accélération de la biodégradation si ce traitement est précédé d'une hydrolyse enzymatique.

### EXEMPLE 5 :

Le présent exemple a pour but d'illustrer l'effet accélérateur du prétraitement par hydrolyse enzymatique selon l'invention sur la biodégradation des boues de substitution imprégnées dans les déblais.

La boue B₄ imprégnée dans les déblais a la constitution suivante :

| | |
|---|---|
| Mélange d'ester type PETROFREE | 451,5 g |
| Emulsifiant | 29, g |
| Asphalte | 20 g |
| CaCl₂ | 32 g |
| Eau | 56 g |
| Chaux | 3 g |
| Densifiant 5µm | 340 g |
| Densifiant 10µm | 680 g |
| (*densifiant : carbonate de calcium ou poudre de marbre) | |

Les déblais prétraités ou non par la lipolase sont ensemencés pour contenir au minimum 10⁷ bactéries par ml après ensemencement. Le milieu de culture est composé de 50 % de boues hydrolysées ou non, et de 50 % d'eau. Le pH du milieu est ajusté approximativement à 7. Les bactéries utilisées pour l'ensemencement sont soit des bactéries adaptées à la dégradation de graisses (dont les triglycérides).

Les résultats sont présentés dans la figure 1 ci-après.

On constate d'après ces graphes qu'en l'absence de prétraitement enzymatique, même avec des bactéries sélectionnées pour la dégradation de la graisse, il existe une période de latence ici d'environ 120 heures pendant laquelle la boue imprégnée est peu dégradée.

## Revendications

1. Procédé de traitement des boues de forage organiques de synthèse récupérées à la surface du sol, caractérisé en ce qu'il comporte au moins une première étape d'hydrolyse d'au moins un ester d'acide carboxylique contenu dans ladite boue au moyen d'une lipase.

2. Procédé selon la revendication 1 caractérisé en ce que l'étape d'hydrolyse est réalisée à un pH basique et à une température inférieure à 60°C.

3. Procédé selon l'une des revendications 1 et 2 caractérisé en ce que le pH est supérieur à 9 et de préférence compris entre 9 et 10.

4. Procédé selon l'une des revendications de 1 à 3 caractérisé en ce que la lipase est une protéine choisie dans le groupe constitué par les lipases de type triacylglycérol hydrolase d'origines fongiques et animales.

5. Procédé selon l'une des revendications de 1 à 4 caractérisé en ce que la lipase est une triacylglycérol acyl hydrolase de nomenclature 3.1.1.3.

6. Procédé selon l'une des revendications de 1 à 5 caractérisé en ce que il comprend au moins une étape de prétraitement de la boue qui consiste à introduire dans la boue une quantité nécessaire de lipase, à maintenir le pH entre 9 et 10 et la température en-dessous de 60°C et à agiter le mélange, puis au moins une étape de traitement bactériologique qui consiste à introduire une quantité nécessaire de bactérie dans le mélange.

7. Procédé selon l'une des revendications de 1 à 6 caractérise en ce que la boue contient au moins un ester d'acide carboxylique de la famille constituée par les monoesters, les diesters et les polyesters d'acides carboxyliques résultant de la réaction d'estérification d'alcools de chaîne linéaire ou ramifiée, saturée ou non, présentant de 1 à 15 atomes de carbone avec au moins un acide mono, di ou polycarboxylique comprenant des chaînes linéaires ou ramifiées, saturées ou non présentant de 6 à 30 atomes de carbone.

8. Procédé selon l'une des revendications de 1 à 7 caractérisé en ce que la boue contient au moins un composé du groupe constitué par les esters d'acides mono,di et tri carboxyliques, les groupements esters contenant de 1 à 8 atomes de carbone et les chaînes de chaque acide contenant de 6 à 18 atomes de carbone.

9. Procédé selon l'une des revendications de 1 à 8 caractérisé en ce que la boue appartient au groupe constitué par toute phase organique contenant des esters, les roches imprégnées de cette phase organique et les boues récupérées après tamisage des déblais.

10. Application du procédé selon l'une des revendications de 1 à 9 au traitement des boues de substitution chargées en déblais de forage, récupérées à la surface du sol, plus particulièrement celles recueillies en mer.

## Claims

1. Method for treatment of organic synthesis drilling muds recovered from the surface of the ground, characterised in that it comprises at least a first step of hydrolysis of at least one carboxylic acid ester contained in the mud by means of a lipase.

2. Method according to claim 1, characterised in that the hydrolysis step is carried out at a basic pH and at a temperature lower than 60°C.

3. Method according to one of claims 1 and 2, characterised in that the pH is greater than 9, and preferably between 9 and 10.

4. Method according to one of claims 1 to 3, characterised in that the lipase is a protein selected from the group constituted by lipases of fungal and animal origin of the hydrolase triacylglycerol type.

5. Method according to one of claims 1 to 4, characterised in that the lipase is a hydrolase acyl triacylglycerol of nomenclature 3.1.1.3.

6. Method according to one of claims 1 to 5, characterised in that it comprises at least one step of pre-treatment of the mud, which consists of introducing into the mud a necessary quantity of lipase, maintaining the pH between 9 and 10 and the temperature below 60°C, and agitating the mixture, then at least one step of bacteriological treatment which consists of introducing a necessary quantity of bacteria in the mixture.

7. Method according to one of claims 1 to 6, characterised in that the mud contains at least one carboxylic acid ester of the family constituted by monoesters, diesters and polyesters of carboxylic acids obtained from the esterification reaction of saturated or unsaturated linear or branched chain alcohols, which have 1 to 15 carbon atoms with at least one mono, di or polycarboxylic acid comprising saturated or unsaturated linear or branched chains, which have 6 to 30 carbon atoms.

8. Method according to one of claims 1 to 7, characterised in that the mud contains at least one compound of the group constituted by the esters of mono, di and tri carboxylic esters, the ester groups containing from 1 to 8 carbon atoms and the chains of each acid containing 6 to 18 carbon atoms.

9. Method according to one of claims 1 to 8, characterised in that the mud belongs to the group constituted by any organic phase which contains esters, rocks impregnated with this organic phase, and muds recovered after filtering the spoil.

10. Application of the method according to one of claims 1 to 9 for treatment of substitution muds loaded with spoil recovered from the surface of the ground, and more particularly those gathered from the sea.

## Patentansprüche

1. Verfahren zur Behandlung von an die Erdoberfläche geförderten organischen Synthesebohrschlämmen, dadurch **gekennzeichnet**, daß es wenigstens eine erste Stufe der Hydrolyse wenigstens eines im Schlamm enthaltenen Carbonsäureesters mit Hilfe einer Lipase umfaßt.

2. Verfahren nach Anspruch 1, dadurch **gekennzeichnet**, daß die Hydrolysestufe bei einem basischen pH und bei einer Temperatur von unter 60°C durchgeführt wird.

3. Verfahren nach einem der Ansprüche 1 und 2, dadurch **gekennzeichnet**, daß der pH über 9 und vorzugsweise zwischen 9 und 10 liegt.

4. Verfahren nach einem der Ansprüche 1 bis 3, dadurch **gekennzeichnet**, daß die Lipase ein Protein, ausgewählt aus der Gruppe, bestehend aus von Pilzen und Tieren stammenden Lipasen vom Typ Triacylglycerinhydrolase, ist.

5. Verfahren nach einem der Ansprüche 1 bis 4, dadurch **gekennzeichnet**, daß die Lipase eine Triacylglycerinacylhydrolase des Typs 3.1.1.3 ist.

6. Verfahren nach einem der Ansprüche 1 bis 5, dadurch **gekennzeichnet**, daß es wenigstens eine Stufe der Vorbehandlung des Schlamms, die darin besteht, daß man in den Schlamm die erforderliche Menge Lipase einarbeitet, den pH zwischen 9 und 10 und die Temperatur unter 60°C hält und die Mischung rührt, und anschließend wenigstens eine Stufe der bakteriologischen Behandlung umfaßt, die darin besteht, daß man in das Gemisch die erforderliche Bakterienmenge einarbeitet.

7. Verfahren nach einem Ansprüche 1 bis 6, dadurch **gekennzeichnet**, daß der Schlamm wenigstens einen Carbonsäureester der Gruppe, bestehend aus Monoestern, Diestern und Polyestern von Carbonsäuren, enthält, wobei man diese Ester durch Veresterung von Alkoholen mit unverzweigter oder verzweigter, gesättigter oder ungesättigter Kette mit 1 bis 15 Kohlenstoffatomen mit wenigstens einer Mono-, Di- oder Polycarbonsäure mit unverzweigten oder verzweigten, gesättigten oder ungesättigten Ketten mit 6 bis 30 Kohlenstoffatomen erhält.

8. Verfahren nach einem der Ansprüche 1 bis 7, dadurch **gekennzeichnet**, daß der Schlamm wenigstens eine Verbindung der Gruppe, bestehend aus Estern von Mono-, Di- oder Tricarbonsäuren, enthält, wobei die Estergruppen 1 bis 8 Kohlenstoffatome und die Ketten jeder Säure 6 bis 18 Kohlenstoffatome enthalten.

9. Verfahren nach einem der Ansprüche 1 bis 8, dadurch **gekennzeichnet**, daß der Schlamm zur Gruppe, bestehend aus jeder Ester enthaltenden organischen Phase, mit dieser organischen Phase getränktem Gestein und Schlämmen, die nach Absieben des Abtrags gewonnenen werden, gehört.

10. Verwendung des Verfahrens nach einem der Ansprüche 1 bis 9 zur Behandlung von an die Erdoberfläche geförderten und insbesondere auf dem Meer gewonnenen, mit Bohrklein beladenen Ersatzschlämmen.
